# EUROPÄISCHE PATENTSCHRIFT

(11) **EP 1 123 958 B1**
(45) Veröffentlichungstag und Bekanntmachung des Hinweises auf die Patenterteilung: **07.05.2003**
(21) Anmeldenummer: 01105212.3
(22) Anmeldetag: 11.03.1999
(51) Int. Cl.: C09J 7/04, D04H 3/16, D04H 1/46

(54) **Klebeband**
Adhesive tape
Ruban adhésif

(30) Priorität: 12.03.1998 DE 29804431 U; 27.10.1998 DE 29819014 U
(43) Veröffentlichungstag der Anmeldung: 16.08.2001
(62) Teilanmeldung aus: 99104802.6
(73) Patentinhaber: certoplast Vorwerk & Sohn GmbH, 42285 Wuppertal (DE)
(72) Erfinder: Rambusch, Peter, 42115 Wuppertal (DE); Mundt, Stefan, 40593 Düsseldorf (DE)
(74) Vertreter: Nunnenkamp, Jörg, Dr.

(56) Entgegenhaltungen:
- EP-A- 0 668 336
- US-A- 5 629 078
- US-A- 5 631 073

## Beschreibung

Die Erfindung betrifft ein Klebeband, mit einem bandförmigen Vliesträger, und mit einer ein- oder beidseitig aufgebrachten Kleberbeschichtung, wobei der Vliesträger durch Wasserstrahlen vernadelt ist, und wobei die Reißdehnung des Vliesträgers unterhalb von 50% liegt.

Ein solches Klebeband wird im Rahmen der US-A 5 631 073 beschrieben und kommt generell in der Gesundheitsindustrie zum Einsatz. Typische Anwendungsfälle sind in der Fixierung von Verbänden, Elektroden usw. zu sehen. Aus diesem Grunde und um die nötige Stabilität zu erreichen, ist das bekannte Klebeband insgesamt relativ steif. Das wird an dieser Stelle durch Einbringen eines zusätzlichen Bindemittels in das Vlies erreicht, welches einzelne Fasern des Vlieses gegeneinander festlegt und so die beschriebene Steifigkeit erzielt.

Der Einsatz des Bindemittels bedingt eine reduzierte Temperaturstabilität, weil nicht ausgeschlossen werden kann, dass das betreffende Mittel schon bei moderaten Temperaturen (d.h. bei ca. 40°C bis 50°C) an zu schmelzen beginnt. Das ist auf dem Haupteinsatzsektor der medizinischen Klebebänder unproblematisch, beschneidet jedoch die weiteren Verwendungsmöglichkeiten. Auch führt das zusätzlich eingebrachte Bindemittel natürlich zu Kostennachteilen bei der Herstellung und vermindert die Recyclingfähigkeit des hiermit insgesamt hergestellten Klebebandes, weil dieses nicht sortenrein ist.

Neben den vorerwähnten mechanischen Verfestigungsverfahren für Faservlies sind auch reine Vernadelungstechniken (ohne Einbringen eines Nähfadens wie bei einem Nähvlies; vgl. EP-B 0 668 336 bzw. DE-U 94 01 037)bekannt, bei welchen durch senkrechten Einstich einer Vielzahl von mit Widerhaken versehenen Nadeln der Faserstoff zu einem Filz bzw. Vlies verfestigt wird. Derartige Techniken haben bisher in die Klebebandherstellung keinen Eingang gefunden.

Der Erfindung liegt das technische Problem zugrunde, ein Klebeband, insbesondere Wickelband zur Bündelung von Kabeln in Automobilen anzugeben, welches bei einwandfreier Wiederverwertbarkeit und Festigkeit sowie einfacher und kostengünstiger Herstellung eine gleichmäßige Oberfläche mit ausgezeichneter Klebefähigkeit aufweist.

Zur Lösung dieses technischen Problems ist Gegenstand der Erfindung die Verwendung eines Klebebandes, mit einem bandförmigen Vliesträger, und mit einer ein- oder beidseitig aufgebrachten Kleberbeschichtung, wobei der Vliesträger durch Luft- und/oder Wasserstrahlen vernadelt ist, und wobei die Reißdehnung des Vliesträgers unterhalb von 50% liegt, als Wickelband zur Bündelung von Kabeln in Automobilen.

Folglich erfährt der erfindungsgemäße Vliesträger eine mechanische Verfestigung durch die Luft- und/oder Wasserstrahlen. Vorzugsweise liegt die Reißdehnung des Vliesträgers zwischen 10% und 30%.

Bei dem Vliesträger handelt es sich in der Regel um ein vernadeltes Stapelvlies, also um einen Vliesträger, welcher insbesondere aus übereinanderliegend angeordneten Vliesschichten, bestehend aus Stapelfasern (also Fasern endlicher Länge), aufgebaut ist. Diese Stapelfasern bilden mittels der Luft- und/oder Wasserstrahlen unter Verwirbelung einen stabilen Verbund.

Im allgemeinen kommen als Fasern zur Vliesherstellung Synthesefasern wie z.B. aus Polyester und/oder Polypropylen zum Einsatz. Dies bietet sich besonders aus dem Grunde an, weil die Verwirbelung der Fasern regelmäßig mit Wasser erfolgt und Synthesefasern bekanntermaßen Wasser nicht aufnehmen. Selbstverständlich besteht generell auch die Möglichkeit, Vliese aus zellulosischen Fasern mit der vorgenannten Verwirbelungstechnik zu verfestigen. Dann ist jedoch die Wasseraufnahme der Fasern zu berücksichtigen.

Immer wird so verfahren, dass die Wasser- bzw. Luftstrahlen auf die Oberfläche des Vlieses mit einem angemessenen Druck auftreffen. Dieser beträgt mindestens 0,6 bar (60 kPa). Bei Wasserstrahlen wird regelmäßig mit hohem Druck gearbeitet, welcher zwischen 14 bis 70 bar (1,4 bis 7 MPa) liegen kann. Jedenfalls ziehen die Wasser- bzw. Luftstrahlen an der Auftreffstelle auf das Vlies Fasern in das Vlies hinein und verwirbeln sie vielfach mit anderen Fasern. Dadurch wird ein textiler Fall und Griff des solchermaßen hergestellten Vliesstoffes gewährleistet. Eine Regulierung der Festigkeiten des auf die Weise behandelten Vliesträgers lässt sich durch Erhöhung der Zahl der Verwirbelungsstellen pro Fläche und des Auftreffdruckes der Wasser- bzw. Luftstrahlen erreichen.

Dabei wird üblicherweise mit Wasser gearbeitet, weil auf Luftstrahlen basierende Verwirbelungstechniken bekanntermaßen hohe Kosten erzeugen, wenngleich eine solche Vorgehensweise ausdrücklich von der Erfindung umfasst wird. Dies gilt auch für Mischformen, d.h., dass mit Luft- und Wasserstrahlen gearbeitet wird.

Im Ergebnis lässt sich das erfindungsgemäße Klebeband äußerst einfach und kostengünstig herstellen, weil auf komplizierte Vernadelungsmethoden verzichtet wird. Vielmehr werden die Vliesstoffe in der Regel kontinuierlich durch eine Anlage geführt, die über der Vliesbahn Reihen von Wasserdüsen besitzt. Diese spritzen sehr feine Wasserstrahlen mit dem bereits angegebenen hohen Druck auf das Vlies und verwirbeln auf diese Weise die Fasern. Hierdurch lassen sich auch verschiedene Musterungen der Vliesstoffe erzeugen. Zu diesem Zweck ist es notwendig, die Unterlage für die Vliesbahn entsprechend zu perforieren. Durch die punktgenaue und mit einstellbarem Auftreffdruck vorgenommene Verwirbelung wird eine gleichmäßige Oberflächenstruktur des Vliesträgers erzielt, welche nahezu die gleichen positiven Eigenschaften wie eine geschlossene Folie aufweist.

Diese glatte und homogene Struktur bedingt, dass - im Vergleich zu herkömmlichen Vliesträgern - weniger Klebstoff für die Kleberbeschichtung aufgebracht zu werden braucht.

Im übrigen wird die Klebfähigkeit verbessert und es stellen sich definiert einstellbare Abzugskräfte bei der maschinellen oder manuellen Verarbeitung ein. Schließlich kann der Vliesträger eine ein- oder beidseitige Appretur- oder Lackschicht (z.B. Acrylatbeschichtung) aufweisen, um speziellen Anforderungen gerecht zu werden. Auch ist die Erzeugung einer Prägestruktur mittels eines Kalanders (kalt oder thermisch) denkbar.

Aufgrund der erzielbaren dichten Oberfläche des mittels Wasserstrahlen oder Luft vernadelten Vliesträgers ist seine Beständigkeit und damit die des gesamten Klebebandes gegenüber Medien wie Öl, Kraftstoff oder Batteriesäure ausgezeichnet. Die glatte Oberfläche des Vliesträgers führt zusätzlich zu einer Erhöhung der Abriebfestigkeit des Klebebandes. Demzufolge lässt sich das erfindungsgemäße Klebeband sowohl im Fahrzeuginnenraum als auch im Bereich des Motors einsetzen. Außerdem kann je nach verwendetem Rohstoff zur Herstellung des Vliesträgers die Verwirbelung gleichsam durch Variation des Wasserdruckes verändert werden, ohne dass - wie beim konventionellen Vernadeln - aufwendige Maschinen (um) rüstungen erforderlich sind. Schließlich bedingt die sortenreine Herstellung des Vliesträgers eine problemlose Wiederverwertung.

Um das Alterungsvermögen bzw. Festigkeitsverluste durch direkte Sonneneinstrahlung zu verringern, ist der Zusatz handelsüblicher UV-Stabilisatoren möglich. Das gilt auch für die Beimengung von vorzugsweise Ammoniumpolyphosphat, welches zu einer flammfesten Ausrüstung des Klebebandes führt.

Im Ergebnis zeichnet sich der durch Luft- und/oder Wasserstrahlen vernadelte Vliesträger durch eine glatte Oberfläche, hervorragende Festigkeitseigenschaften und eine einfache Herstellung sowie Wiederverwertbarkeit aus, so dass das betreffende Klebeband für den beschriebenen Einsatzzweck besonders prädestiniert ist.

Weitere vorteilhafte Ausgestaltungen werden im Folgenden beschrieben. So weist der Vliesträger üblicherweise eine Dicke von 0,2 bis 0,5 mm, vorzugsweise ca. 0,3 mm, auf. Sein Flächengewicht beträgt im Allgemeinen 60 bis 120 g/m², vorzugsweise ca. 70 g/m². Die Reißkraft des Vliesträgers ist größtenteils in einem Bereich von 30 bis 100 N/cm, vorzugsweise mehr als 40 N/cm, angesiedelt.

Die Abrollkraft ist durch die Oberflächenstruktur des Vliesträgers in engen Grenzen einstellbar und erfährt im Gegensatz zu herkömmlichen Trägermaterialien, insbesondere aus Gewebe, bei der Lagerung nur noch minimale Änderungen. Insofern wird im Rahmen der Erfindung auch die Lagerfähigkeit und damit die erzielbare Lagerdauer deutlich verbessert.

Durch den Zusatz des Flammschutzmittels, z.B. Ammoniumpolyphosphat, oder die Verwendung eines modifizierten Polyesterwerkstoffes, lässt sich das Klebeband flammfest ausrüsten. Ein solcher modifizierter Polyesterwerkstoff weist gleichsam ein in die Molekülstruktur eingebundenes Flammschutzmittel auf, welches bei entsprechender Temperatur frei wird und die gewünschte (feuerhemmende) Wirkung freisetzt. Um das Alterungsvermögen bzw. Festigkeitsverluste durch direkte Sonneneinstrahlung zu verringern, ist darüber hinaus der Zusatz handelsüblicher UV-Stabilisatoren denkbar. Schließlich kann der Vliesträger eine ein- oder beidseitige Lackschicht oder Appreturschicht als Kaschierung aufweisen, um die Haftung der hierauf aufgebrachten Kleberbeschichtung zu verbessern. In diese Richtung zielen auch Maßnahmen zur Oberflächenprägung.

Durch den sich insbesondere bei der Verwendung von Polyester einstellenden hohen elektrischen Widerstand des Vliesträgers bietet sich das erfindungsgemäße Klebeband zur Bündelung und Isolierung von (Hochspannungskabeln) im Kraftfahrzeug, beispielsweise im Zusammenhang mit der Zündanlage, an. Infolge des relativ geringen Flächengewichtes wird bei gleicher Lauflänge im Vergleich zum Stand der Technik das Gewicht einer Klebebandrolle reduziert, so dass die Handhabung beim Umwickeln von Kabelbäumen erleichtert ist. Gleichzeitig wird am fertigen Kabelbaum eine Gewichtsersparnis erreicht. Schließlich kann der Vliesträger eine ein- oder beidseitige Prägung aufweisen.

Die Gestaltung und das Aussehen eines luft- und/oder wasserstrahlvernadelten Vliesträgers bei einem erfindungsgemäßen Klebeband wird anhand der nachfolgenden Figur erläutert. Diese zeigt das vorgenannte Klebeband im Längsschnitt.

In dieser Figur ist ein Wickelband zur Bündelung von Kabeln in Automobilen dargestellt. Dieses Wickelband weist einen bandförmigen, mechanisch verfestigten Vliesträger 1 auf. Dieser Vliesträger 1 besitzt eine ein- oder beidseitig aufgebrachte Kleberbeschichtung 2. Nach dem Ausführungsbeispiel ist lediglich eine Kleberbeschichtung 2 auf der Oberseite vorgesehen. Der Vliesträger 1 ist mittels Wasserstrahlen vernadelt, und zwar im einzelnen als wasserstrahlvernadeltes Stapelvlies ausgebildet. Dieses Stapelvlies besteht aus mehreren, im Zuge der Verwirbelung mit Wasser miteinander verbundenen, Vliesschichten 3. Zur Verbesserung der Haftfähigkeit der Oberfläche des Vliesträgers 1 ist eine Lack- bzw. Appreturbeschichtung 4 aufgetragen, auf welche die Kleberbeschichtung 2 aufgebracht wurde. Im dargestellten Ausführungsbeispiel ist auch auf der Bandrückenseite bzw. Bandrückseite eine Appreturbeschichtung 5 aufgetragen.

### Beispiel:

Auf einen wasserstrahlvernadelten Stapelvliesträger mit einem Flächengewicht von ca. 70 g/m² wird eine Appreturbeschichtung aufkaschiert und darauffolgend im Rakel- oder Düsenauftragsverfahren eine Kleberbeschichtung aufgetragen. Im Anschluss hieran wird das fertige Produkt getrocknet und zu Ballen aufgewickelt. Abschließend erfolgt die Konfektionierung jeweiliger Klebebänder nach der gewünschten Vorgabe.

Die Herstellung des wasserstrahlvernadelten Stapelvliesträgers wird wie folgt durchgeführt. Zunächst werden gepresste Kunststofffilamente, insbesondere Polyesterfilamente, in einer Kombination aus Schredder- und Verwirbelungsanlage in die Form einzelner Fasern endlicher Länge, die Stapelfasern, gebracht. Diese Stapelfasern werden im Anschluss hieran in einem Vakuumverfahren unter Zufuhr von Hitze und Druck in der Breite übereinandergelegt, so dass ein weiches, voluminöses Vliesbett mit einzelnen Vliesschichten und einer Gesamtstärke von ca. 5 cm entsteht.

Danach erfolgt die mechanische Verfestigung des Vlieses durch eine gleichsam "Sprinkleranlage". Diese schießt mit Hochdruck kleinste Wasserstrahlen durch das Material. Gleichzeitig erfolgt eine Verringerung der Stärke auf ca. 1 cm. Anschließend wird der Vliesträger über Walzen abgeführt, um die gewünschte Stärke und Festigkeit einzustellen. Zum Abschluss erfolgt noch eine Trocknung in einem nachfolgenden Wärmekanal.

Grundsätzlich kann auch ein Prägeschritt der Trocknung vorund/oder nachgeschaltet werden, um die Haftfähigkeit der ggf. aufgebrachten Appretur bzw. des Lackes sowie der Kleberbeschichtung zu vergrößern.

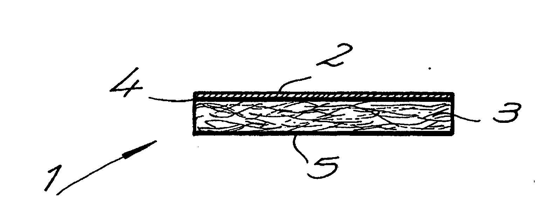

## Patentansprüche

1. Verwendung eines Klebebandes, mit einem bandförmigen Vliesträger (1), und mit einer ein- oder beidseitig aufgebrachten Kleberbeschichtung (2), wobei der Vliesträger (1) durch Luft- und/oder Wasserstrahlen vernadelt ist, und wobei die Reißdehnung des Vliesträgers (1) unterhalb von 50% liegt, als Wickelband zur Bündelung von Kabeln in Automobilen.

2. Verwendung nach Anspruch 1, **dadurch gekennzeichnet, dass** die Reißdehnung des Vliesträgers (1) zwischen 10% und 30% liegt.

3. Verwendung nach Anspruch 1 oder 2, **dadurch gekennzeichnet, dass** der Vliesträger (1) als vernadeltes Stapelvlies ausgebildet ist.

4. Verwendung nach einem der Ansprüche 1 bis 3, **dadurch gekennzeichnet, dass** als Fasern zur Vliesherstellung Synthesefasern wie z.B. aus Polyester, Polyamid und/oder Polypropylen, eingesetzt werden.

5. Verwendung nach einem der Ansprüche 1 bis 4, **dadurch gekennzeichnet, dass** die Festigkeit des durch Wasserund/oder Luftstrahlen vernadelten Vliesträgers (1) durch Erhöhung der Zahl der Verwirbelungsstellen pro Fläche und des Auftreffdruckes der Wasser- bzw. Luftstrahlen regulierbar ist.

6. Verwendung nach einem der Ansprüche 1 bis 5, **dadurch gekennzeichnet, dass** der Vliesträger (1) eine Dicke von 0,2 mm bis 0,5mm, vorzugsweise ca. 0,3 mm, aufweist.

7. Verwendung nach einem der Ansprüche 1 bis 6, **dadurch gekennzeichnet, dass** das Flächengewicht des Vliesträgers (1) 60 bis 120 g/m², vorzugsweise ca. 70 g/m², beträgt.

8. Verwendung nach einem der Ansprüche 1 bis 7, **dadurch gekennzeichnet, dass** die Reißkraft bzw. Reißfestigkeit des Vliesträgers (1) in einem Bereich von 30 bis 100 N/cm liegt, vorzugsweise größer als 40 N/cm ist.

9. Verwendung nach einem der Ansprüche 1 bis 8, **dadurch gekennzeichnet, dass** das Klebeband durch Zusatz eines Flammschutzmittels, z.B. Ammoniumpolyphosphat, oder durch Einsatz eines modifizierten Polyesterwerkstoffes, flammfest ausgebildet ist.

10. Verwendung nach einem der Ansprüche 1 bis 9, **dadurch gekennzeichnet, dass** der Vliesträger (1) eine ein- oder beidseitige Appretur- bzw. Lackschicht aufweist.

## Claims

1. Use of an adhesive tape comprising a tape-like nonwoven backing (1), and comprising an adhesive coating (2) applied on one or both sides, wherein the nonwoven backing (1) is needle-bonded by air- and/or water jets, and wherein the elongation at tear of the nonwoven backing (1) is less than 50 %, as a winding tape for bundling cables in automobiles.

2. A use according to claim 1, **characterised in that** the elongation at tear of the nonwoven backing (1) is between 10 % and 30 %.

3. A use according to claim 1 or 2, **characterised in that** the nonwoven backing (1) is formed as a needle-bonded, stacked nonwoven fabric.

4. A use according to any one of claims 1 to 3, **characterised in that** synthetic fibres, such as those made of polyester, polyamide and/or polypropylene, are used as fibres for producing the nonwoven fabric.

5. A use according to any one of claims 1 to 4, **characterised in that** the strength of the nonwoven backing (1), which is needle-bonded by water- and/or air jets, can be controlled by increasing the number of intermingling points per unit surface, and by increasing the impingement pressure of the water- or air jets.

6. A use according to any one of claims 1 to 5, **characterised in that** the nonwoven backing (1) has a thickness of 0.2 mm to 0.5 mm, preferably about 0.3 mm.

7. A use according to any one of claims 1 to 6, **characterised in that** the weight per unit area of the nonwoven backing (1) is 60 to 120 g/m², preferably about 70 g/m².

8. A use according to any one of claims 1 to 7, **characterised in that** the tensile strength or resistance to tearing of the nonwoven backing (1) falls within a range from 30 to 100 N/cm, and is preferably greater than 40 N/cm.

9. A use according to any one of claims 1 to 8, **characterised in that** the adhesive tape is rendered flameproof by the addition of a flame retardant, e.g. ammonium polyphosphate, or by the use of a modified polyester material.

10. A use according to any one of claims 1 to 9, **characterised in that** the nonwoven backing (1) has a finishing or lacquer layer on one or both sides.

## Revendications

1. Utilisation d'un ruban adhésif comportant un support en forme de ruban (1) pour un non-tissé ainsi qu'un revêtement de colle (2) appliqué sur l'une ou les deux faces, le support de non-tissé (1) étant aiguilleté par des jets d'air et/ou d'eau et l'allongement à la rupture du support de feutre (1) est inférieur à 50 %, ce ruban étant utilisé pour former les faisceaux de câble dans l'industrie automobile.

2. Utilisation selon la revendication 1,
**caractérisée en ce que**
l'allongement à la rupture du support de feutre (1) est compris entre 10 % et 30 %.

3. Utilisation selon la revendication 1 ou 2,
**caractérisée en ce que**
le support de non-tissé (1) est formé d'une couche de non-tissé aiguilletée.

4. Utilisation selon les revendications 1 à 3,
**caractérisée en ce que**
les fibres pour la réalisation du non-tissé sont des fibres de synthèse comme, par exemple, des fibres de polyester, de polyamide et/ou de polypropylène.

5. Utilisation selon les revendications 1 à 4,
**caractérisée en ce que**
la résistance du support de non-tissé (1) aiguilleté par des jets d'eau et/ou d'air est régulée par augmentation du nombre de sources de turbulence par unité de surface et par la pression à l'arrivée des jets d'eau ou d'air.

6. Utilisation selon l'une quelconque des revendications 1 à 5,
**caractérisée en ce que**
le support de non-tissé (1) a une épaisseur comprise entre 0,2 mm et 0,5 mm et de préférence de l'ordre de 0,3 mm.

7. Utilisation selon l'une quelconque des revendications 1 à 6,
**caractérisée en ce que**
le poids par unité de surface du support de non-tissé (1) est compris entre 60 et 120 g/m², de préférence de l'ordre de 70 g/m².

8. Utilisation selon l'une quelconque des revendications 1 à 7,
**caractérisée en ce que**
la force de rupture ou la résistance à la rupture du support de non-tissé (1) est comprise dans une plage de l'ordre de 30 à 100 N/cm et cette force est de préférence supérieure à 40 N/cm.

9. Utilisation selon l'une quelconque des revendications 1 à 8,
**caractérisée en ce que**
le ruban adhésif est rendu ignifuge par l'addition d'un agent de protection contre les flammes comme, par exemple, du polyphosphate d'ammonium ou par l'utilisation d'un polyester modifié.

10. Utilisation selon l'une quelconque des revendications 1 à 9,
**caractérisée en ce que**
le support de non-tissé (1) est muni sur l'une ou les deux faces, d'une couche d'apprêt ou de vernis.
